# FASCICULE DE BREVET EUROPEEN

(11) **EP 4 492 735 B1**
(45) Date de publication et mention de la délivrance du brevet: **10.09.2025**
(21) Numéro de dépôt: 24187628.3
(22) Date de dépôt: 10.07.2024
(51) Int. Cl.: H04L 12/28, H04L 41/0654, H04L 41/0686, H04L 69/40, H04W 24/04, H04L 41/0659, H04L 41/08, H04W 88/16

(54) **PROCÉDÉ DE RESTAURATION AUTOMATIQUE DE FONCTIONNALITÉ DANS UNE PASSERELLE RÉSIDENTIELLE**
VERFAHREN ZUR AUTOMATISCHEN WIEDERHERSTELLUNG DER FUNKTIONALITÄT IN EINEM RESIDENTIAL-GATEWAY
METHOD FOR AUTOMATICALLY RESTORING FUNCTIONALITY IN A RESIDENTIAL GATEWAY

(30) Priorité: 11.07.2023 FR 2307444
(43) Date de publication de la demande: 15.01.2025
(73) Titulaire: SAGEMCOM BROADBAND SAS, 92270 Bois-Colombes (FR)
(72) Inventeur: KORBER, Nicolas, 92270 BOIS-COLOMBES (FR)
(74) Mandataire: Cabinet Le Guen Maillet

(56) Documents cités:
- US-A1- 2012 278 654
- US-A1- 2016 285 676
- US-A1- 2021 409 261

## Description

### DOMAINE TECHNIQUE

La présente invention concerne un procédé de restauration automatique de fonctionnalité dans une passerelle résidentielle (« residential gateway » en anglais) offrant des services d'accès réseau large bande (« broadband access » en anglais) via un accès sans-fil fixe (FWA, pour « Fixed Wireless Access » en anglais).

### ETAT DE LA TECHNIQUE ANTERIEURE

Les technologies d'accès sans fil fixe (FWA) permettent aux opérateurs de réseaux de fournir un accès réseau large bande ultra-rapide, sans avoir à déployer de structures réseau câblées ou fibrées, en s'appuyant sur les technologies de réseaux mobiles de dernières générations (4G, 5G...). Cela permet notamment de fournir des services d'accès réseau large bande dans des zones géographiques suburbaines et rurales où le déploiement de la fibre optique peut présenter une complexité élevée de déploiement et de maintenance.

Malgré les bénéfices apportés par ces technologies d'accès sans fil fixe, il demeure que certains dysfonctionnements nécessitent aujourd'hui une intervention humaine.

Par exemple, dans le cas où une passerelle résidentielle ne communique plus avec un serveur de configuration automatique ACS (« Auto Configuration Server » en anglais), la liaison de plan de contrôle est rompue, il est généralement considéré que celle-ci ne peut pas être restaurée à distance si la panne provient de la partie accès large bande de la passerelle résidentielle. Il faut généralement une intervention manuelle et locale pour sortir de cette situation : redémarrage de la passerelle résidentielle, restauration de paramètres de sortie d'usine... Cela nécessite un appel technicien avec l'utilisateur final, voire qu'un technicien intervienne chez l'utilisateur final.

Lorsque des tentatives de réparation manuelle (redémarrage, restauration de paramètres de sortie d'usine, configuration par interface graphique de la passerelle résidentielle accessible via une interface LAN (« Local Area Network » en anglais) échouent, si la panne est logicielle et non matérielle, il est potentiellement possible de restaurer la fonctionnalité d'accès large bande de la passerelle résidentielle en lui injectant des commandes particulières. Malheureusement, ce type d'opération n'est pas possible à distance si la liaison de plan de contrôle est rompue.

Le document US 2016/0285676 décrit un procédé mettant en œuvre l'utilisation d'un dispositif de communication tiers pour communiquer des informations de diagnostic et de configuration concernant le réseau de communication à large bande à un dispositif de gestion du réseau de communication à large bande, via un chemin de communication alternatif.

Le document US 2012/0278654 décrit la restauration d'une fonctionnalité d'accès à un réseau (e.g., Internet) d'un dispositif sans fil (e.g., modem, point d'accès) au sein d'un réseau de communication local à l'aide d'un système de gestion sans aucune intervention humaine.

Il est souhaitable de fournir une solution qui permette de traiter de manière automatique ce type de dysfonctionnements, sans intervention humaine.

### EXPOSE

Il est proposé ici un procédé de restauration d'une fonctionnalité d'un contrôleur large bande d'une passerelle résidentielle, la passerelle résidentielle comportant de la circuiterie électronique implémentant un modem pour connecter la passerelle résidentielle à un réseau mobile via lequel un réseau large bande est accessible, la circuiterie électronique implémentant en outre le contrôleur large bande pour connecter la passerelle résidentielle au réseau large bande. Pour remédier à un dysfonctionnement du contrôleur large bande, le procédé comporte : recevoir, par le modem, par le biais d'un plan utilisateur du réseau mobile, un message d'alerte instruisant d'appliquer une stratégie de restauration visant à restaurer la fonctionnalité du contrôleur large bande ; et appliquer, par le modem, la stratégie de restauration à l'égard du contrôleur large bande.

Ainsi, la restauration de la fonctionnalité d'un contrôleur large bande d'une passerelle résidentielle est réalisée de manière automatique, sans avoir recours à une intervention humaine.

Selon un mode de réalisation particulier, le procédé comprend en outre : transmettre, par le modem, par le biais du plan utilisateur du réseau mobile, un message de confirmation confirmant que la stratégie de restauration a été appliquée.

Selon un mode de réalisation particulier, le message de confirmation prend la forme d'un message SMS de service destiné à un numéro de téléphone dédié.

Selon un mode de réalisation particulier, le message d'alerte prend la forme d'un message SMS.

Selon un mode de réalisation particulier, le message d'alerte contient une information représentative de la stratégie de restauration à appliquer parmi un ensemble prédéfini de stratégies de restauration.

Selon un mode de réalisation particulier, le message d'alerte contient un descriptif d'une commande ou d'un ensemble de commandes à appliquer dans la stratégie de restauration.

Selon un mode de réalisation particulier, lorsque la stratégie de restauration consiste à rebooter la passerelle résidentielle, le modem enregistre en mémoire non-volatile une information indiquant devoir transmettre le message de confirmation après reboot de la passerelle résidentielle et remise en place du plan utilisateur du réseau mobile.

Il est aussi proposé un programme d'ordinateur comportant des instructions de code de programme causant une implémentation du procédé exposé ci-dessus dans l'un quelconque de ses modes de réalisation, lorsque lesdites instructions sont exécutées par un processeur. Il est aussi proposé ici un support de stockage d'informations stockant de telles instructions de code de programme.

Il est également proposé une passerelle résidentielle comportant de la circuiterie électronique configurée pour Passerelle résidentielle comportant de la circuiterie électronique configurée pour implémenter un modem pour connecter la passerelle résidentielle à un réseau mobile via lequel un réseau large bande est accessible, et un contrôleur large bande pour connecter la passerelle résidentielle au réseau large bande. Pour remédier à un dysfonctionnement du contrôleur large bande, la circuiterie électronique est configurée pour : recevoir, par le modem, par le biais d'un plan utilisateur du réseau mobile, un message d'alerte instruisant d'appliquer une stratégie de restauration visant à restaurer la fonctionnalité du contrôleur large bande ; appliquer, par le modem, la stratégie de restauration à l'égard du contrôleur large bande ; et transmettre, par le modem, par le biais du plan utilisateur du réseau mobile, un message de confirmation confirmant que la stratégie de restauration a été appliquée.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication ;
[Fig. 2] illustre schématiquement une interconnexion interne d'une passerelle résidentielle du système de communication ;
[Fig. 3] illustre schématiquement un agencement matériel utilisable dans la passerelle résidentielle ;
[Fig. 4] illustre schématiquement des chemins de communication logiques dans le système de communication ;
[Fig. 5] illustre schématiquement un algorithme de restauration automatique de fonctionnalité de la passerelle résidentielle, dans un mode de réalisation ; et
[Fig. 6] illustre schématiquement des échanges intervenant dans le système de communication dans le cadre d'une restauration automatique de fonctionnalité de la passerelle résidentielle, dans un mode de réalisation.

### EXPOSE DETAILLE DE MODES DE REALISATION

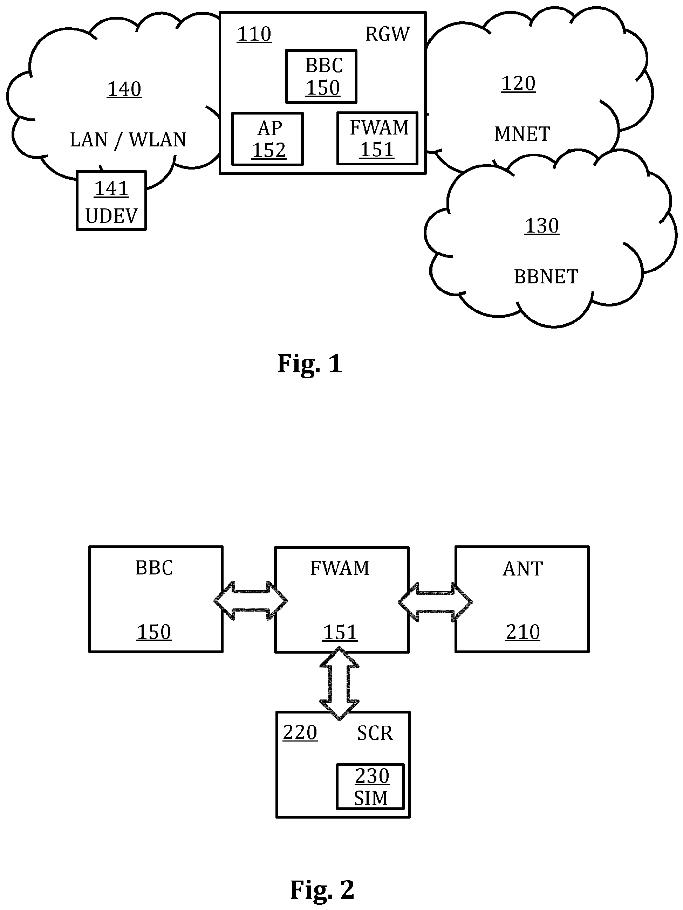

La Fig. 1 illustre ainsi schématiquement un système de communication comportant une passerelle résidentielle RGW 110.

La passerelle résidentielle RGW 110 implémente une technologie d'accès sans fil fixe (FWA). La passerelle résidentielle RGW 110 est considéré comme un équipement de type CPE (« Customer-Premises Equipment » en anglais) dans les technologies de type FWA.

La passerelle résidentielle RGW 110 est apte à fournir un ensemble de services à un utilisateur final, dont un service d'accès à un réseau large bande, également désigné par réseau haut débit ou réseau d'accès fixe, BBNET 130 par l'intermédiaire d'un réseau mobile MNET 120. Il est fait usage de manière équivalente des termes « réseau large bande », « réseau haut débit », « réseau d'accès fixe ».

La passerelle résidentielle RGW 110 comporte un modem FWAM 151 pour connecter la passerelle résidentielle RGW 110 au réseau mobile MNET 120 et un contrôleur large bande BBC 150 (ou contrôleur d'accès large bande) pour connecter la passerelle résidentielle RGW 110 au réseau large bande BBNET 130. Par les termes « contrôleur large bande », il également entendu un contrôleur d'accès au réseau large bande, ou de manière équivalente, un contrôleur d'accès au réseau haut débit.

La passerelle résidentielle RGW 110 comporte préférentiellement un gestionnaire d'interface LAN, tel qu'un point d'accès AP 152 permettant de mettre en place un réseau de type WLAN (« Wireless LAN » en anglais), comme par exemple un réseau Wi-Fi. L'utilisateur peut ainsi profiter des services offerts par le réseau large bande BBNET 130 par le biais d'un terminal ou dispositif utilisateur UDEV 141 (tel qu'un ordinateur, une tablette électronique, un téléphone intelligent, un décodeur TV...).

La Fig. 2 illustre schématiquement une interconnexion interne de la passerelle résidentielle RGW 110.

Le modem FWAM 151 est interconnecté avec le contrôleur BBC 150.

Le modem FWAM 151 est interconnecté avec un lecteur de carte SIM (« Subscriber Identity Module » en anglais) SCR 220 dans lequel peut être placée une carte SIM (« SIM card » en anglais) 230. En variante, le modem FWAM 151 peut être interconnecté avec une puce de type eSIM soudée sur une carte électronique de la passerelle résidentielle RGW 110 ou intégrée de manière logicielle et/ou matérielle dans la passerelle résidentielle RGW 110. Le modem FWAM 151 implémente une fonction d'équipement utilisateur UE (« User Equipment » en anglais) vis-à-vis du réseau mobile MNET 120, selon la terminologie employée dans les standards de réseaux de téléphonie mobile.

Le modem FWAM 151 est interconnecté avec un système antennaire ANT 210 permettant au modem FWAM 151 de communiquer avec des équipements du réseau mobile MNET 120.

Les interconnexions au sein de la passerelle résidentielle RGW 110 peuvent être réalisées grâce à des bus de communication, par exemple de type PCI (« Peripheral Component Interconnect » en anglais) ou USB (« Universal Serial bus » en anglais).

Pour permettre à la passerelle résidentielle RGW 110 de bénéficier des services du réseau mobile MNET 120, le modem FWAM 151 effectue une authentification de la carte SIM 230, ou de la puce eSIM, auprès du réseau mobile MNET 120, par exemple en échangeant avec un centre d'authentification AuC (« Authentication Center » en anglais) du réseau mobile MNET 120. Suite à cette authentification préalable de la carte SIM 230, ou la puce eSIM, le modem FWAM 151 détient une clé de chiffrement permettant que des communications soient réalisées par et avec la passerelle résidentielle RGW 110 dans le réseau mobile MNET 120. La passerelle résidentielle RGW 110 peut ainsi bénéficier des services du réseau mobile MNET 120. Un lien de communication opérationnel est alors établi entre la passerelle résidentielle RGW 110 et le cœur du réseau mobile MNET 120, et une autre authentification peut être alors réalisée au travers ce lien de communication pour permettre à la passerelle résidentielle RGW 110 de réaliser une autre authentification auprès du réseau large bande BBNET 130 afin de pouvoir bénéficier des services du réseau large bande BBNET 130.

Le modem FWAM 151 et le contrôleur BBC 150 opèrent de manière autonome l'un de l'autre. Chacun possède ses propres ressources de traitement/calculs et de mémoire. Le modem FWAM 151 et le contrôleur BBC 150 peuvent être implémentés de manière logicielle sur un même processeur et être interconnectés par un bus logiciel. Le modem FWAM 151 et le contrôleur BBC 150 peuvent être en variante implémentés sur des processeurs distincts et être interconnectés par un bus matériel.

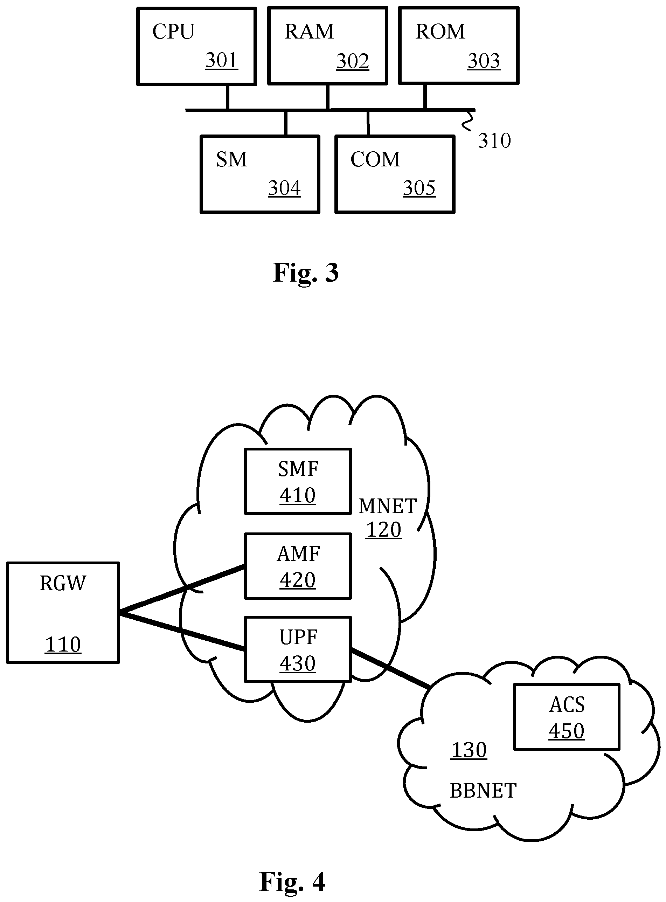

La Fig. 3 illustre schématiquement un agencement matériel utilisable dans la passerelle résidentielle RGW 110, plus particulièrement pour implémenter le contrôleur BBC 150 et/ou le modem FWAM 151.

L'agencement matériel présenté comporte, reliés par un bus de communication 310 : un processeur ou CPU (« Central Processing Unit » en anglais) 301 ; une mémoire vive RAM (« Random-Access Memory » en anglais) 302 ; une mémoire non volatile, par exemple de type ROM (« Read Only Memory » en anglais) 303 ou EEPROM (« Electrically-Erasable Programmable ROM » en anglais), ou de type Flash ; une unité de stockage, telle qu'un support de stockage SM 304, par exemple un disque dur HDD, ou un lecteur de support de stockage, tel qu'un lecteur de cartes SD (« Secure Digital » en anglais) ; et un gestionnaire d'interfaces COM 305.

Le gestionnaire d'interfaces COM 305 permet à l'agencement matériel présenté d'interagir avec d'autres éléments de la passerelle résidentielle RGW 110, comme par exemple le lecteur de carte SIM SCR 220 ou le système antennaire ANT 210 ou le point d'accès AP 152.

Le processeur ou CPU 301 est capable d'exécuter des instructions chargées dans la mémoire vive 302, notamment à partir de la mémoire non volatile 303 ou du support de stockage SM (tel qu'une carte SD) 304. Lorsque l'agencement matériel présenté est mis sous tension, le processeur ou CPU 301 est ainsi capable de lire de la mémoire vive RAM 302 des instructions et de les exécuter. Ces instructions forment un programme d'ordinateur causant notamment l'implémentation, par le processeur ou CPU 301, des étapes et comportements décrits ici en relation avec le modem FWAM 151 et avec le contrôleur BBC 150, ou plus généralement de la passerelle résidentielle RGW 110.

Tout ou partie des étapes et comportements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le modem FWAM 151 et le contrôleur BBC 150, et plus généralement la passerelle résidentielle RGW 110, comportent de la circuiterie électronique adaptée et configurée pour implémenter les étapes et comportements décrits ici.

La Fig. 4 illustre schématiquement des chemins de communication logiques dans le système de communication.

De manière illustrative, le réseau mobile MNET 120 est conforme aux standards de téléphonie mobile 5G.

Le réseau mobile MNET 120 comporte, outre une partie réseau d'accès radio RAN (« Radio Access Network » en anglais), et une partie réseau cœur qui inclut divers équipements et/ou fonctions dont une entité SMF (« Session Management Function » en anglais) 410, une entité AMF (« Access and Mobility management Function » en anglais) 420 et une entité UPF (« User plane Function » en anglais) 430.

Comme son nom l'indique, l'entité UPF gère le plan utilisateur, aussi appelé plan de données (« Data Plane » en anglais), c'est-à-dire le transport du trafic utilisateur. Une liaison de plan utilisateur relie ainsi la passerelle résidentielle RGW 110 et l'entité UPF 430. Cette liaison de plan utilisateur est supportée par une interface typiquement notée NG-u entre la partie réseau accès radio et la partie réseau cœur.

Ainsi, en ce qui concerne la passerelle résidentielle RGW 110, les échanges réalisés entre la passerelle résidentielle RGW 110 et le réseau large bande BBNET 130 passent par l'entité UPF 430 dans le réseau mobile MNET 120. En d'autres termes, les échanges via le réseau mobile MNET 120 qui impliquent le contrôleur BBC 150 passent par la liaison de plan utilisateur avec l'entité UPF 430, que ce soit pour des échanges de messages de plan de contrôle (« Control Plane » en anglais) ou des échanges de données de plan utilisateur.

Ainsi, le contrôleur BBC 150 est en communication avec le réseau large bande BBNET 130. Pour échanger avec un serveur de configuration automatique ACS 450 impliqué dans le plan de contrôle du réseau large bande BBNET 130, le contrôleur BBC 150 implémente typiquement un daimôn (« daemon » en anglais) selon le protocole TR-069 (« CPE WAN Management Protocol », édité par le Broadband Forum).

Les échanges de données utilisateur qui impliquent le modem FWAM 151, tels que des échanges par messages SMS (« Short Message Service » en anglais), passent par la liaison de plan utilisateur avec l'entité UPF 430.

Pour permettre la mise en place des liaisons de plan utilisateur dans le réseau mobile MNET 120, l'entité SMF 410 et l'entité AMF 420 coopèrent dans l'implémentation du plan de contrôle du réseau mobile MNET 120. Une liaison de plan contrôle relie ainsi la passerelle résidentielle RGW 110 et l'entité AMF 420. Cette liaison de plan de contrôle est supportée par une interface typiquement notée NG-c entre la partie réseau accès radio et la partie réseau cœur.

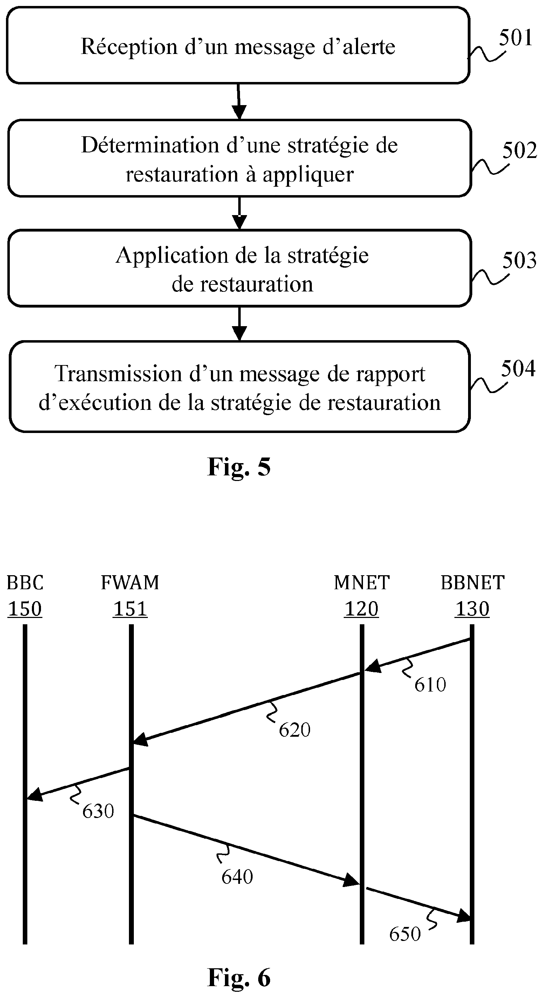

La Fig. 5 illustre schématiquement un algorithme de restauration automatique de fonctionnalité de la passerelle résidentielle RGW 110, dans un mode de réalisation. L'algorithme de la Fig. 5 vise à rendre pleinement opérationnelle la passerelle résidentielle RGW 110 suite à une défaillance constatée du contrôleur BBC 150. Comme détaillé ci-après en relation avec la Fig. 6, la défaillance du contrôleur BBC 150 est constatée depuis le réseau large bande BBNET 130, par exemple par le serveur de configuration automatique ACS 450.

Dans une étape 501, le modem FWAM 151 reçoit un message d'alerte par le biais du plan utilisateur du réseau mobile MNET 120. Le message d'alerte est représentatif d'une défaillance constatée du contrôleur BBC 150.

Dans un mode de réalisation particulier, ce message d'alerte prend la forme d'un message SMS. Ce message SMS n'ayant pas vocation à être lu par l'utilisateur, la passerelle résidentielle RGW 110 l'efface sans le conserver dans la carte SIM ou en mémoire du modem FWAM 151. Dans un autre exemple, ce message est reçu et traité par un élément sécurisé du modem FWAM 151, élément auquel l'utilisateur final n'a pas accès. On parle de message SMS de service ou de message SMS silencieux.

Préférentiellement, le message d'alerte contient une information représentative d'une stratégie de restauration à appliquer par le modem FWAM 151 à l'égard du contrôleur BBC 150 (parmi un ensemble prédéfini de stratégies de restauration).

Dans un mode de réalisation particulier, le message d'alerte contient un descriptif d'une commande ou d'un ensemble de commandes à appliquer par le modem FWAM 151 à l'égard du contrôleur BBC 150 dans la stratégie de restauration.

Dans une étape 502, le modem FWAM 151 détermine une stratégie de restauration à appliquer pour faire face à la défaillance constatée du contrôleur BBC 150. La stratégie de restauration à appliquer peut être déduite du message d'alerte reçu. La stratégie de restauration à appliquer peut être aussi déduite en opérant quelques tests de réaction du contrôleur BBC 150 à des stimuli générés par le modem FWAM 151. Cela peut permettre de déterminer dans quelle mesure le contrôleur BBC 150 est inopérant, ou quelle fonctionnalité du contrôleur BBC 150 est à restaurer, et décider en conséquence de la stratégie de restauration à appliquer.

La stratégie de restauration peut consister à rebooter la passerelle résidentielle RGW 110, par exemple sur demande dans le message d'alerte ou parce que le modem FWAM 151 a constaté que le contrôleur BBC 150 est totalement inopérant. Dans ce cas, le modem FWAM 151 enregistre en mémoire non-volatile une information indiquant devoir reprendre l'algorithme de la Fig. 5 à une étape 504 lorsque la passerelle résidentielle RGW 110 aura redémarré et que le lien de communication avec le réseau mobile MNET 120 sera de nouveau opérationnel (remise en place du plan utilisateur du réseau mobile MNET 120).

La stratégie de restauration peut consister à redémarrer uniquement le contrôleur BBC 150, par exemple sur demande dans le message d'alerte ou parce que le modem FWAM 151 a constaté que le contrôleur BBC 150 est inopérant sur une partie d'un ensemble de tests unitaires.

La stratégie de restauration peut consister à restaurer des paramètres de sortie d'usine du contrôleur BBC 150, par exemple sur demande dans le message d'alerte.

La stratégie de restauration peut consister à exécuter une commande ou un ensemble de commandes comme prédéfinie(s) dans le message d'alerte.

L'objectif de la stratégie de restauration est de restaurer une fonctionnalité du contrôleur BBC 150, et de rendre ainsi le contrôleur BBC 150 à nouveau opérationnel et apte à être en communication avec le réseau large bande BBNET 130, de manière à permettre à la passerelle résidentielle RGW 110 de bénéficier des services du réseau large bande BBNET 130.

Alors, dans l'étape 504, le modem FWAM 151 transmet, en réponse au message d'alerte reçu à l'étape 501, un message de confirmation d'application de la stratégie de restauration. Dans un mode de réalisation particulier, le modem FWAM 151 vérifie quel résultat l'application de la stratégie de restauration a donné, et inclut une information représentative dudit résultat dans le message de réponse.

Dans un mode de réalisation particulier, ce message d'alerte prend la forme d'un message SMS de service destiné à un numéro de téléphone dédié. Ce message SMS de service n'ayant pas vocation à être lu par l'utilisateur, la passerelle résidentielle RGW 110 l'efface sans le conserver dans la carte SIM ou en mémoire du modem FWAM 151.

La Fig. 6 illustre schématiquement des échanges intervenant dans le système de communication dans le cadre d'une restauration automatique de fonctionnalité de la passerelle résidentielle RGW 110, dans un mode de réalisation.

Préalablement aux échanges de la Fig. 6, un équipement du réseau large bande BBNET 130 détecte un dysfonctionnement du contrôleur BBC 150 de la passerelle résidentielle RGW 110. Par exemple, dans le plan de contrôle du réseau large bande BBNET 130, le serveur de configuration automatique ACS 450 détecte une perte de connexion avec le contrôleur BBC 150. Par exemple, en application du protocole TR-069, le contrôleur BBC 150 est supposé contacter de manière périodique le serveur de configuration automatique ACS 450. Si tel n'est pas le cas, le serveur de configuration automatique ACS 450 détecte la perte de connexion avec le contrôleur BBC 150. Une perte de connexion avec le contrôleur BBC 150 peut aussi être détectée suite à un nombre prédéfini de tentatives infructueuses de contacter le contrôleur BBC 150.

Dans une étape 610, suite à la détection du dysfonctionnement du contrôleur BBC 150 de la passerelle résidentielle RGW 110, un équipement du réseau large bande BBNET 130 envoie à un équipement du réseau mobile MNET 120 un message d'alerte à adresser au modem FWA 151 de la passerelle résidentielle RGW 110. L'équipement du réseau large bande BBNET 130 informe l'équipement du réseau mobile MNET 120 en question de l'identité de la passerelle résidentielle RGW 110, par exemple par son adresse MAC (« Medium Access Control » en anglais) ou son identité IMEI (« International Mobile Equipment Identity » en anglais). L'équipement du réseau large bande BBNET 130 qui envoie le message d'alerte à l'équipement du réseau mobile MNET 120 fait en général partie d'un système de support opérationnel OSS (« Operational Support System » en anglais) du réseau large bande BBNET 130. L'envoi de ce message peut être effectué via une notification évènementielle de type « event log », ou « web socket », ou être transportée par un protocole MQTT (« Message Queuing Telemetry Transport » en anglais) ou http(s) (« HyperText Transfer Protocol (Secure) » en anglais), etc.

Dans une étape 620, l'équipement du réseau mobile MNET 120 transmet le message d'alerte au modem FWA 151 de la passerelle résidentielle RGW 110. Comme déjà indiqué, dans un mode de réalisation particulier, ce message d'alerte prend la forme d'un message SMS de service. L'équipement du réseau mobile MNET 120 en question est alors un centre de messagerie SMSC (« Short Message Service Center » en anglais).

Dans une étape 630, le modem FWA 151 applique une stratégie de restauration, comme déjà expliqué en relation avec la Fig. 5.

Une fois la stratégie de restauration appliquée, dans une étape 640, le modem FWA 151 envoie, en réponse au message d'alerte, un message de confirmation d'application de la stratégie de restauration. Comme déjà indiqué, dans un mode de réalisation particulier, ce message prend la forme d'un message SMS de service.

Et dans une étape 650, l'équipement du réseau mobile MNET 120 ayant reçu le message de confirmation d'application de la stratégie de restauration en informe un équipement du réseau large bande BBNET 130, typiquement le serveur de configuration automatique ACS 450. Il est ainsi possible de rétablir de manière automatique la communication entre le réseau large bande BBNET 130 et le contrôleur BBC 150 de la passerelle résidentielle RGW 110, sans avoir donc recours à une intervention humaine.

Dans un mode de réalisation particulier, au sein du réseau large bande BBNET 130, le message d'alerte et le message de confirmation peuvent transiter par un serveur intermédiaire, appelé serveur PNM (« Pro-active Network Management » en anglais).

Dans un mode de réalisation particulier, le modem FWA 110 échange directement avec le réseau large bande BBNET 130 dans le cadre de l'application de la stratégie de restauration.

## Revendications

1. Procédé de restauration d'une fonctionnalité d'un contrôleur large bande (150) d'une passerelle résidentielle (110), la passerelle résidentielle (110) comportant de la circuiterie électronique implémentant un modem (151) pour connecter la passerelle résidentielle (110) à un réseau mobile (120) via lequel un réseau large bande (130) est accessible, la circuiterie électronique implémentant en outre le contrôleur large bande (150) pour connecter la passerelle résidentielle (110) au réseau large bande (130),
procédé selon lequel, pour remédier à un dysfonctionnement du contrôleur large bande (150), le procédé comporte :
- recevoir (501), par le modem (151), par le biais d'un plan utilisateur du réseau mobile (120), un message d'alerte instruisant d'appliquer une stratégie de restauration visant à restaurer la fonctionnalité du contrôleur large bande (150) ;
- appliquer (503), par le modem (151), la stratégie de restauration à l'égard du contrôleur large bande (150).

2. Procédé selon la revendication 1, comportant en outre :
- transmettre (504), par le modem (151), par le biais du plan utilisateur du réseau mobile (120), un message de confirmation confirmant que la stratégie de restauration a été appliquée.

3. Procédé selon la revendication 2, dans lequel le message de confirmation prend la forme d'un message SMS de service destiné à un numéro de téléphone dédié.

4. Procédé selon l'une quelconque des revendications 1 à 3, dans lequel le message d'alerte prend la forme d'un message SMS.

5. Procédé selon l'une quelconque des revendications 1 à 4, dans lequel le message d'alerte contient une information représentative de la stratégie de restauration à appliquer parmi un ensemble prédéfini de stratégies de restauration.

6. Procédé selon l'une quelconque des revendications 1 à 5, dans lequel le message d'alerte contient un descriptif d'une commande ou d'un ensemble de commandes à appliquer dans la stratégie de restauration.

7. Procédé selon l'une quelconque des revendications 1 à 6, dans lequel, lorsque la stratégie de restauration consiste à rebooter la passerelle résidentielle (110), le modem (151) enregistre en mémoire non-volatile une information indiquant devoir transmettre (504) le message de confirmation après reboot de la passerelle résidentielle (110) et remise en place du plan utilisateur du réseau mobile (120).

8. Passerelle résidentielle (110) comportant de la circuiterie électronique configurée pour implémenter un modem (151) pour connecter la passerelle résidentielle (110) à un réseau mobile (120) via lequel un réseau large bande (130) est accessible, et un contrôleur large bande (150) pour connecter la passerelle résidentielle (110) au réseau large bande (130),
la circuiterie électronique, pour remédier à un dysfonctionnement du contrôleur large bande (150), étant configurée pour :
- recevoir (501), par le modem (151), par le biais d'un plan utilisateur du réseau mobile (120), un message d'alerte instruisant d'appliquer une stratégie de restauration visant à restaurer la fonctionnalité du contrôleur large bande (150) ;
- appliquer (503), par le modem (151), la stratégie de restauration à l'égard du contrôleur large bande (150).

9. Produit programme d'ordinateur comportant des instructions de code de programme causant une implémentation du procédé selon l'une quelconque des revendications 1 à 7, lorsque lesdites instructions sont exécutées par un processeur.

10. Support de stockage d'informations stockant des instructions de code de programme causant une implémentation du procédé selon l'une quelconque des revendications 1 à 7, lorsque lesdites instructions sont lues et exécutées par un processeur.

## Patentansprüche

1. Verfahren zur Wiederherstellung einer Funktionalität eines Breitband-Controllers (150) eines Residential Gateways (110), wobei das Residential Gateway (110) elektronische Schaltkreise umfasst, die ein Modem (151) implementieren, um das Residential Gateway (110) mit einem Mobilfunknetz (120) zu verbinden, über das auf ein Breitbandnetz (130) zugegriffen werden kann, wobei die elektronischen Schaltkreise ferner den Breitband-Controller (150) implementieren, um das Residential Gateway (110) mit dem Breitbandnetz (130) zu verbinden, wobei das Verfahren, um eine Funktionsstörung des Breitband-Controllers (150) zu beheben, Folgendes umfasst:
- Empfangen (501), durch das Modem (151), über eine Benutzerebene des Mobilfunknetzes (120), einer Warnnachricht, die anweist, eine Wiederherstellungsstrategie anzuwenden, die die Funktionalität des Breitband-Controllers (150) wiederherstellen soll;
- Anwenden (503), durch das Modem (151), der Wiederherstellungsstrategie in Bezug auf den Breitband-Controller (150).

2. Verfahren nach Anspruch 1, ferner umfassend:
- Übertragen (504), durch das Modem (151), über die Benutzerebene des Mobilfunknetzes (120), einer Bestätigungsnachricht, die bestätigt, dass die Wiederherstellungsstrategie angewendet wurde.

3. Verfahren nach Anspruch 2, wobei die Bestätigungsnachricht die Form einer SMS-Dienstnachricht aufweist, die für eine spezielle Telefonnummer bestimmt ist.

4. Verfahren nach einem der Ansprüche 1 bis 3, wobei die Warnnachricht die Form einer SMS-Nachricht aufweist.

5. Verfahren nach einem der Ansprüche 1 bis 4, wobei die Warnnachricht eine Information enthält, die für die anzuwendende Wiederherstellungsstrategie aus einem vordefinierten Satz Wiederherstellungsstrategien repräsentativ ist.

6. Verfahren nach einem der Ansprüche 1 bis 5, wobei die Warnnachricht eine Beschreibung eines Befehls oder eines Satzes Befehle enthält, der bei der Wiederherstellungsstrategie anzuwenden ist.

7. Verfahren nach einem der Ansprüche 1 bis 6, wobei, wenn die Wiederherstellungsstrategie darin besteht, das Residential Gateway (110) zu rebooten, das Modem (151) in einem nichtflüchtigen Speicher eine Information abspeichert, die angibt, dass nach dem Reboot des Residential Gateways (110) und der Wiedereinrichtung der Benutzerebene des Mobilfunknetzes (120) die Bestätigungsnachricht übertragen werden muss (504).

8. Residential Gateway (110), umfassend elektronische Schaltkreise, die dazu konfiguriert sind, ein Modem (151) zu implementieren, um das Residential Gateway (110) mit einem Mobilfunknetz (120) zu verbinden, über das auf ein Breitbandnetz (130) zugegriffen werden kann, und einen Breitband-Controller (150), um das Residential Gateway (110) mit dem Breitbandnetz (130) zu verbinden, wobei die elektronischen Schaltkreise, um eine Funktionsstörung des Breitband-Controllers (150) zu beheben, zu Folgendem konfiguriert sind:
- Empfangen (501), durch das Modem (151), über eine Benutzerebene des Mobilfunknetzes (120), einer Warnnachricht, die anweist, eine Wiederherstellungsstrategie anzuwenden, die die Funktionalität des Breitband-Controllers (150) wiederherstellen soll;
- Anwenden (503), durch das Modem (151), der Wiederherstellungsstrategie in Bezug auf den Breitband-Controller (150).

9. Computerprogrammprodukt, das Programmcodeanweisungen umfasst, die, wenn die Anweisungen von einem Prozessor ausgeführt werden, eine Implementierung des Verfahrens nach einem der Ansprüche 1 bis 7 bewirken.

10. Medium zum Speichern von Informationen, das Programmcodeanweisungen speichert, die, wenn die Anweisungen von einem Prozessor gelesen und ausgeführt werden, eine Implementierung des Verfahrens nach einem der Ansprüche 1 bis 7 bewirken.

## Claims

1. Method for restoring a functionality of a broadband controller (150) of a residential gateway (110), the residential gateway (110) comprising electronic circuitry implementing a modem (151) for connecting the residential gateway (110) to a mobile network (120) via which a broadband network (130) is accessible, the electronic circuitry furthermore implementing the broadband controller (150) to connect the residential gateway (110) to the broadband network (130), method according to which, to remedy a malfunctioning of the broadband controller (150), the method comprises:
- receiving (501), by the modem (151), by means of a user plane of the mobile network (120), an alert message instructing applying a restoration strategy aimed at restoring the functionality of the broadband controller (150);
- applying (503), by the modem (151), the restoration strategy with regard to the broadband controller (150).

2. Method according to claim **1,** furthermore comprising:
- transmitting (504), by the modem (151), by means of the user plane of the mobile network (120), a confirmation message confirming that the restoration strategy has been applied.

3. Method according to claim 2, wherein the confirmation message takes the form of a service SMS message intended for a dedicated telephone number.

4. Method according to any one of claims 1 to 3, wherein the alert message takes the form of an SMS message.

5. Method according to any one of claims 1 to 4, wherein the alert message contains information representing the restoration strategy to be applied from a predefined set of restoration strategies.

6. Method according to any one of claims 1 to 5, wherein the alert message contains a description of a command or of a set of commands to be applied in the restoration strategy.

7. Method according to any one of claims 1 to 6, wherein, when the restoration strategy consists of rebooting the residential gateway (110), the modem (151) records in non-volatile memory information indicating that the confirmation message has to be transmitted (504) after the residential gateway (110) is rebooted and the user plane of the mobile network (120) is re-established.

8. Residential gateway (110) comprising electronic circuitry configured to implement a modem (151) for connecting the residential gateway (110) to a mobile network (120) via which a broadband network (130) is accessible, and a broadband controller (150) for connecting the residential gateway (110) to the broadband network (130), the electronic circuitry, to remedy a malfunctioning of the broadband controller (150), being configured for:
- receiving (501), by the modem (151), by means of a user plane of the mobile network (120), an alert message instructing applying a restoration strategy aimed at restoring the functionality of the broadband controller (150);
- applying (503), by the modem (151), the restoration strategy with regard to the broadband controller (150).

9. Computer program product comprising program code instructions causing the implementation of the method according to any one of claims 1 to 7, when said instructions are executed by a processor.

10. Information storage medium storing program code instructions causing an implementation of the method according to any one of claims 1 to 7, when said instructions are read and executed by a processor.
